# FASCICULE DE BREVET EUROPEEN

(11) **EP 1 426 559 B1**
(45) Date de publication et mention de la délivrance du brevet: **18.02.2009**
(21) Numéro de dépôt: 02447235.9
(22) Date de dépôt: 03.12.2002
(51) Int. Cl.: F01D 9/04

(54) **Virole interieure pour compresseur axial et utilisation**
Innerer Mantelring eines axialen Kompressors sowie dessen Verwendung
Inner shroud for an axial compressor and use

(43) Date de publication de la demande: 09.06.2004
(73) Titulaire: Techspace Aero S.A., 4041 Milmort (BE)
(72) Inventeur: Lhoest, André, 4500 Huy (BE)
(74) Mandataire: pronovem

(56) Documents cités:
- EP-A- 0 787 890
- EP-A- 1 111 246
- US-A- 3 404 831
- US-A- 3 680 977
- US-A- 4 452 564

## Description

### Objet de l'invention

La présente invention se rapporte à une nouvelle virole intérieure destinée à la réalisation d'un redresseur faisant partie d'un compresseur axial.

En particulier, la virole de l'invention est destinée à équiper le dernier étage d'un booster ou compresseur basse pression d'une turbomachine.

### Etat de la technique

Dans les machines tournantes telles que les turbomachines, les compresseurs basse ou haute pression sont essentiellement constitués de plusieurs étages d'aubes tournantes rotoriques séparés par des étages redresseurs qui ont pour rôle de repositionner le vecteur vitesse du fluide sortant de l'étage précédent avant de l'envoyer dans le compartiment suivant. En outre, ces redresseurs ont un rôle de carter.

Ces étages redresseurs sont constitués essentiellement d'aubes fixes statoriques reliant une virole extérieure à une virole intérieure, toutes deux concentriques et éventuellement percées d'ajours pour le passage de ces aubes. Les aubes statoriques sont généralement fixées à la virole extérieure par des moyens tels que boulonnage, soudage, rivetage, etc. Les aubes ne sont pas boulonnées à la virole intérieure (voir ci-dessous).

Le document US 4 452 564 décrit un tel arrangement comprenant une virole intérieure en contact avec le carter intermédiaire selon l'état de la technique.

Les vibrations de ces machines en fonctionnement soumettent les redresseurs à des efforts importants qui provoquent une usure par fatigue. Dans le but de résoudre ce problème de fatigue, on a proposé différents dispositifs permettant de rigidifier les redresseurs. Il s'agit par exemple de raidisseurs en forme de bandage ou d'escaliers usinés sur la virole intérieure ou extérieure, du côté non fonctionnel du capot.

Afin d'augmenter l'étanchéité d'un étage à l'autre, il est d'autre part habituel de disposer sous la tôle de la virole intérieure du redresseur un élément élastomère, tel que silicone chargé de billes de verre, qui scelle l'aube fixe sur la virole intérieure et qui sert également de joint "abradable" entre les parties tournantes et fixes. Ceci permet d'éviter un retour des gaz vers l'étage précédent, ce qui pourrait entraîner un décrochage moteur dans le cas d'un turbofan. Aussi, dans une demande européenne précédente (publication EP-A-1 111 246), la Demanderesse a proposé une virole rigidifiée par incorporation d'un ou plusieurs éléments métalliques noyés dans une pièce élastomère telle que mentionnée ci-dessus.

La présente demande de brevet concerne plus particulièrement la virole intérieure de l'aubage du redresseur du dernier étage du booster ou compresseur basse pression d'une turbomachine. Cette virole prend appui sur le carter intermédiaire avec une interférence dans la direction axiale. En effet, le contact franc ou avec faible jeu engendrerait la destruction du redressseur suite aux vibrations. La présence d'un jeu plus important provoquerait la recirculation d'air entre les enceintes, donc des fuites préjudiciables. La solution mise en oeuvre généralement est donc un appui de la virole interne sur le carter intermédiaire avec précontrainte obtenue lors du montage.

L'état de la technique présente un certain nombre d'inconvénients. D'abord, la virole intérieure doit être usinée et positionnée avec une très grande précision par rapport à la bride de la virole extérieure correspondante. Ensuite, la précontrainte réalisée lors du montage engendre un effort conséquent sur les aubes, ce qui exclut le montage des aubes par rivets ou l'utilisation d'un carter en aluminium. Il conviendrait donc de pouvoir trouver une solution qui évite une virole intérieure précontrainte.

### Buts de l'invention

La présente invention vise à fournir une solution qui permette de s'affranchir des inconvénients de l'état de la technique.

La présente invention a en particulier pour but de proposer une virole intérieure du dernier étage redresseur d'un compresseur basse pression sans contact avec précontrainte avec un carter intermédiaire.

La présente invention a encore pour but de fournir une virole intérieure simple de réalisation et de montage, peu coûteuse et très fiable.

### Principaux éléments caractéristiques de l'invention

Un premier objet de la présente invention se rapporte à une virole intérieure pour dernier étage redresseur d'un compresseur axial basse pression, comprenant des ajours pour le passage d'aubes disposées de manière radiale et solidarisées avec la dite virole par un élément élastomère adhérant à ladite virole sur son côté interne, ladite virole présentant une interférence sous forme de contact avec un carter intermédiaire venant à la suite dudit étage redresseur dans la direction axiale, caractérisée en ce que ladite virole intérieure comprend une partie métallique s'arrêtant avant la zone de contact avec le carter intermédiaire, ladite partie métallique étant prolongée par la matière élastomère adhérente jusqu'à ladite zone de contact.

Selon l'invention, la partie de virole prolongée en élastomère est réalisée à cotes finies et présente une surface réalisant la veine aérodynamique.

De préférence, l'élément élastomère est en silicone chargé ou non de billes de verre.

Avantageusement, le contact avec le carter intermédiaire est un contact sans jeu.

Il résulte encore avantageusement de l'invention que le prolongement en matière élastomère a une forme permettant d'augmenter la souplesse de la virole, de préférence présente une gorge située du côté interne.

Un second objet de la présente invention se rapporte à un compresseur axial basse pression muni d'un dernier étage redresseur, comprenant deux viroles, une virole intérieure et une virole extérieure reliées par des aubes fixes, la virole extérieure étant fixée, de préférence par boulonnage, à un carter intermédiaire suivant le dernier étage redresseur dans la direction axiale, caractérisé en que la virole intérieure est de type décrit ci-dessus.

Le compresseur axial basse pression selon l'invention est plus particulièrement destiné à un moteur aéronautique simple ou double corps tel que turboréacteur, turbopropulseur ou turbosoufflante.

### Brève description des figures

La figure 1 représente une vue en coupe axiale du dernier étage compresseur/redresseur d'un compresseur basse pression présentant une virole intérieure en contact avec le carter intermédiaire, selon une forme d'exécution préférée de l'état de la technique.

La figure 2 représente une vue en coupe axiale du dernier étage compresseur/redresseur d'un compresseur basse pression présentant une virole intérieure en contact avec le carter intermédiaire, selon une forme d'exécution préférée de l'invention.

### Description d'une forme d'exécution préférée de l'état de la technique

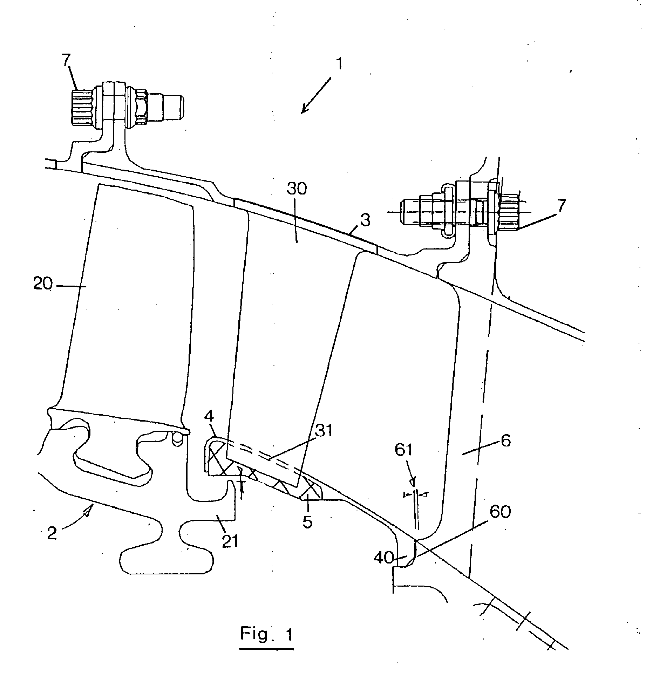

La figure 1 montre une forme d'exécution mise en oeuvre dans l'état de la technique. Le compresseur basse pression 1 présente un dernier étage rotorique d'aubes mobiles 20 disposées sur le tambour 2, suivi d'un dernier étage redresseur statorique d'aubes fixes 30. Celles-ci sont montées entre une virole extérieure 3 et une virole intérieure 4. Les viroles extérieures des différents étages redresseurs sont solidarisées entre elles par des moyens de fixation 7, tels que boulons, pour former un capot. La virole intérieure 4 a la forme d'une tôle percée d'ajours 31 pour le passage des aubes. Les aubes sont collées à la virole intérieure par une matière abradable 5, par exemple constituée de silicone contenant des billes de verre, qui joue le rôle de joint d'étanchéité au niveau du tambour 2. Il est à remarquer qu'au niveau du dernier étage du compresseur basse pression, l'étanchéité stricte est remplacée par une fuite calibrée au niveau d'une léchette 21 usinée dans le tambour. Cette fuite calibrée permet de pressuriser l'enceinte à cet endroit.

La virole intérieure 4 du dernier étage redresseur est prolongée par usinage 40 à une cote telle qu'un contact 60 avec précontrainte 61 est mis en oeuvre lors du montage sur le carter intermédiaire 6.

### Description d'une forme d'exécution préférée de l'invention

L'idée à la base de la présente invention était que l'on souhaitait raccourcir la virole intérieure du dernier étage du redresseur d'un compresseur basse pression à une cote telle que la tôle n'entre pas en contact avec jeu ou précontrainte avec le carter intermédiaire.

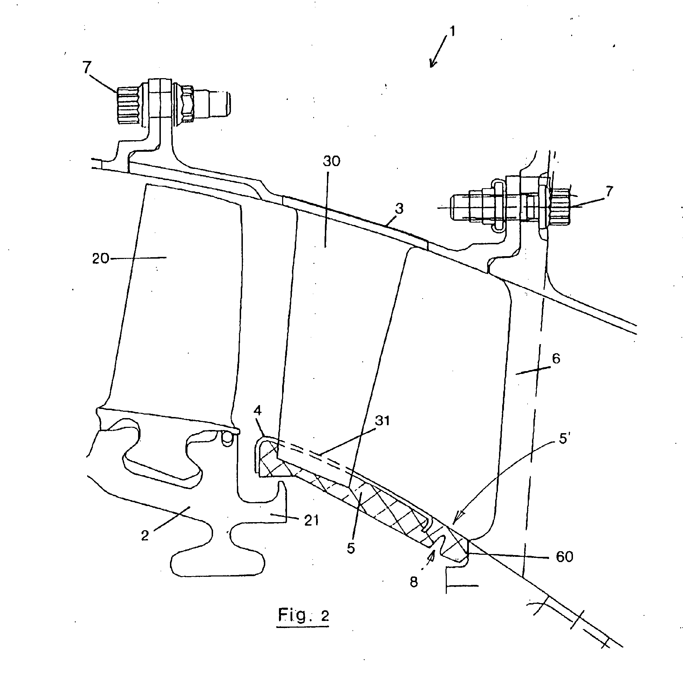

La solution proposée dans le cadre de la présente demande est détaillée à la figure 2. La largeur de la partie en tôle de virole intérieure 4 est réduite, la partie en matière abradable de la virole étant prolongée par une extension 5' à cotes finies allant au-delà de la tôle jusqu'au contact avec le carter intermédiaire 6. De manière avantageuse, la souplesse de la virole peut être augmentée par la réalisation d'une gorge 8 dans la partie abradable 5', située côté intérieur, donc à l'opposé de la veine aérodynamique. Comme la partie en abradable 5' prolongeant la virole intérieure 4 a une surface dans la veine aérodynamique, il est aussi particulièrement avantageux d'utiliser un silicone sans charge de billes de verre. Cette limitation n'est pas importante vu qu'un jeu de fuite calibrée est prévu au niveau de la léchette du dernier étage, ce implique l'absence de contact.

La présente invention présente de nombreux avantages :
- elle ne nécessite pas de nouvelle opération de fabrication ; la virole ne doit plus être usinée avec des cotes très précises, mais peut être réalisée en tôle cintrée, ce qui s'avère nettement moins coûteux ;
- le gain de masse est important dans la mesure où la densité de l'abradable est de l'ordre de 1, par opposition à une densité de 4,5 pour le titane par exemple ;
- le prolongement en abradable permet la réalisation de formes augmentant la souplesse de la virole ;
- l'interférence de la virole avec le carter intermédiaire est franche car les matières sont compatibles ; en particulier, la matière élastomère absorbe les vibrations et empêche les recirculations d'air ;
- il n'y a aucune nécessité de précontrainte et la zone de contact entre la virole intérieure et les pieds d'aubes n'est donc plus sollicitée, ce qui diminue par là-même le risque de casse ;
- possibilité d'augmentation de la tolérance de position de la virole interne.

## Revendications

1. Virole intérieure (4) pour dernier étage redresseur d'un compresseur axial basse pression (1), comprenant des ajours (31) pour le passage d'aubes (30) disposées de manière radiale et solidarisables avec ladite virole par un élément élastomère (5) adhérant à ladite virole sur son côté interne, ladite virole présentant pendant une interférence sous forme de contact (60) avec un carter l'operation intermédiaire (6) venant à la suite dudit étage redresseur du compresseur dans la direction axiale, **caractérisée en ce que** ladite virole intérieure (4) comprend une partie métallique s'arrêtant avant la zone de contact avec le carter intermédiaire, ladite partie métallique étant prolongée par la partie élastomère adhérente (5') dans la veine aérodynamique, jusqu'à ladite zone de contact (60).

2. Virole selon la revendication 1, **caractérisée en ce que** la partie de virole prolongée en élastomère (5') est réalisée à cotes finies.

3. Virole selon la revendication 1 ou 2, **caractérisée en ce que** l'élément élastomère (5,5') est en silicone chargé ou non de billes de verre.

4. Virole selon l'une quelconque des revendications 1 à 3, **caractérisée en ce que** le contact (60) avec le carter intermédiaire est un contact sans jeu.

5. Virole selon l'une quelconque des revendications précédentes, **caractérisée en ce que** le prolongement en matière élastomère (5') comporte une gorge (8) située du côté interne permettant d'augmenter la souplesse de la virole.

6. Compresseur axial basse pression muni d'un dernier étage redresseur, comprenant deux viroles, une virole intérieure (4) et une virole extérieure (3) reliées par des aubes fixes (30), la virole extérieure (3) étant fixée, de préférence par boulonnage (7), à un carter intermédiaire (6) suivant le dernier étage redresseur dans la direction axiale, **caractérisé en que** la virole intérieure (4) est une virole selon la revendication 1.

7. Utilisation d'un compresseur axial basse pression selon la revendication 6 dans un moteur aéronautique, de préférence dans un turboréacteur ou turbopropulseur.

## Claims

1. Inner collar (4) for the last guide vane stage of a low-pressure axial compressor (1), with openings (31) for the passage of blades (30) that are radially arranged and can be fixed to said collar by an elastomer element (5) attached to said collar on its inner side, said collar presenting an interference, during the operation of the compressor, in the form of contact (60) with an intermediate casing (6) positioned after said guide vane stage in the axial direction, **characterised in that** said inner collar (4) comprises a metal part that ends before the zone of contact with the intermediate casing, said metal part extending up to said contact zone (60) by the attached elastomer part (5') in the aerodynamic flow.

2. Collar according to Claim 1, **characterised in that** the part of the collar extended by elastomer (5') is formed by net shaping.

3. Collar according to Claim 1 or 2, **characterised in that** the elastomer element (5,5') is made of silicone, impregnated or not with glass balls.

4. Collar according to any one of Claims 1 to 3, **characterised in that** the contact (60) with the intermediate casing is a gap-free contact.

5. Collar according to any one of the preceding claims, **characterised in that** the extension in elastomer material (5') comprises a groove (8) located on the inner side that allows to increase the flexibility of the collar.

6. Low-pressure axial compressor equipped with a last guide vane stage, comprising two collars, an inner collar (4) and an outer collar (3) connected by fixed blades (30), the outer collar (3) being attached, preferably by bolting (7), to an intermediate casing (6) after the last guide vane stage in the axial direction, **characterised in that** the inner collar (4) is a collar according to Claim 1.

7. Use of a low-pressure axial compressor according to Claim 6 in an aeronautics engine, preferably a turbojet or a turboprop.

## Patentansprüche

1. Innenring (4) für die letzte Stufe des Leitapparates eines Niederdruck-Axialkompressors (1), der Durchbrüche (31) für den Durchgang von Radschaufeln (30) enthält, die in radialer Weise und mit besagtem Ring durch ein Elastomerelement (5) verbindbar angeordnet sind. Das Elastomerelement haftet an dem besagten Ring an seiner Innenseite an. Der besagte Ring stellt während des Kompressorbetriebes eine Überlagerung in Form eines Kontakts (60) mit einem Zwischengehäuse (6) dar, das im Anschluss auf die besagte Leitapparatstufe des Kompressors in axialer Richtung folgt. Die Erfindung ist **dadurch gekennzeichnet, dass** dieser besagte Innenring (4) einen Metallbereich umfasst, der vor der Kontaktzone zum Zwischengehäuse endet; der besagte Metallbereich wird durch das anhaftende Elastomerteil (5') im aerodynamischen Strahl bis zur besagten Kontaktzone (60) verlängert.

2. Ring gemäß dem Anspruch 1, **dadurch gekennzeichnet, dass** der Teil der Ringverlängerung aus Elastomer (5') mit Endabmessungen gefertigt wird.

3. Ring gemäß den Ansprüchen 1 bzw. 2, **dadurch gekennzeichnet, dass** das Elastomerelement (5, 5') aus evtl. mit Glaskugeln gefülltem Silikon besteht.

4. Ring gemäß einem der Ansprüche 1 bis 3, **dadurch gekennzeichnet, dass** es sich bei dem Kontakt (60) mit dem Zwischengehäuse um einen spielfreien Kontakt handelt.

5. Ring gemäß einem der vorherigen Ansprüche, **dadurch gekennzeichnet, dass** die Verlängerung aus Elastomermaterial (5') eine Nut (8) enthält, die sich auf der Innenseite befindet und es ermöglicht, die Flexibilität des Rings zu verstärken.

6. Niederdruck-Axialkompressor, der mit einer letzten Stufe eines Leitapparates ausgestattet ist und zwei Ringe, einen Innenring (4) und einen Außenring (3) enthält, die über zwei feste Radschaufeln (30) mit einander verbunden sind; der Außenring (3) ist vorzugsweise durch eine Schraubenverbindung an einem Zwischengehäuse (6) befestigt, das in axialer Richtung im Anschluss auf diese letzte Stufe eines Leitapparates folgt. Der Niederdruck-Axialkompressor ist **dadurch gekennzeichnet, dass** es sich bei dem Innenring (4) um einen Ring gemäß dem Anspruch 1 handelt.

7. Nutzung eines Niederdruck-Axialkompressors gemäß dem Anspruch 6 in einem Flugtriebwerk, vorzugsweise in einem Turbostrahltriebwerk oder einem PTL-Triebwerk.
